(19) **Europäisches Patentamt European Patent Office Office européen des brevets**

(11) **EP 4 539 469 A1**

(12) **EUROPEAN PATENT APPLICATION**
published in accordance with Art. 153(4) EPC

(43) Date of publication:
16.04.2025 Bulletin 2025/16

(21) Application number: 23841976.6

(22) Date of filing: 14.06.2023

(51) International Patent Classification (IPC):
*H04N 21/2187* (2011.01)

(52) Cooperative Patent Classification (CPC):
H04L 69/16; H04N 21/2187; H04N 21/4788

(86) International application number:
PCT/CN2023/100239

(87) International publication number:
WO 2024/016910 (25.01.2024 Gazette 2024/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.07.2022 CN 202210851451

(71) Applicant: ZTE Corporation
Shenzhen, Guangdong 518057 (CN)

(72) Inventors:
• TAO, Guojun
Shenzhen, Guangdong 518057 (CN)
• LIU, Qun
Shenzhen, Guangdong 518057 (CN)
• YOU, Qiumin
Shenzhen, Guangdong 518057 (CN)
• TAO, Changbiao
Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) **LIVESTREAMING DATA TRANSMISSION METHOD AND SYSTEM, ELECTRONIC DEVICE, AND STORAGE MEDIUM**

(57)    The present application relates to the technical field of communications, and in particular, to a method for live broadcast data transmission and system, electronic device, and storage medium. In the method for live broadcast data transmission of embodiments of the present application, it comprises: starting a live broadcast service for a target user on the basis of a data transmission mode of unicast type (S101); detecting a popularity participation indicator in the live broadcast service (S102); when the popularity participation indicator meets a preset standard-reaching condition, setting a popularity sampling time period on the basis of a standard-reaching time point of the popularity participation indicator (S103); sampling the popularity participation indicator on the basis of the popularity sampling time period to obtain a popularity prediction indicator (S104); and finally adjusting the data transmission mode for the live broadcast service according to the popularity prediction indicator (S105).

FIG. 1

# Description

## CROSS-REFERENCE TO RELATED APPLICATIONS

The present application is based on the Chinese patent application with application number 202210851451.0 and application date of July 20, 2022, and claims the priority of this Chinese patent application, the entire content of which is incorporated herein by reference.

## TECHNICAL FIELD

The present application relates to the technical field of communications, and in particular, to a method for live broadcast data transmission and system, electronic device, and storage medium.

## BACKGROUND

With the rapid development of science and technology, video live broadcast has become an important part of people's daily life. At present, in order to distribute the live broadcast data, video live broadcast service (including traditional video live broadcast service and new Internet live broadcast service) need to pre-formulate a live broadcast data distribution strategy before the start of the live broadcast, so as to complete the distribution of live broadcast data according to the pre-formulated strategy. In the pre-formulated live broadcast data distribution strategy of the related technology, unicast transmission mode or multicast transmission mode is generally selected based on the predicted number of viewing users, the two types of transmission modes cannot be switched during the live broadcast data transmission process due to mutual isolation. Therefore, since the number of viewing users cannot be accurately estimated before the live broadcast begins, there is often a mismatch between the live broadcast data transmission mode and the number of viewing users during the distribution and live broadcast data transmission, resulting in a waste of network resources. Therefore, how to make full use of network resources during the live broadcast data transmission is becoming an urgent problem to be solved by industry insiders.

## SUMMARY

The present application proposes a method for live broadcast data transmission and system, electronic device, and storage medium.

According to the embodiment of the first aspect of the present application, a method for live broadcast data transmission comprises: starting a live broadcast service for a target user on the basis of a data transmission mode of unicast type; detecting a popularity participation indicator in the live broadcast service, the popularity participation indicator reflects the participation degree of the target user in the live broadcast service; when the popularity participation indicator meets a preset standard-reaching condition, setting a popularity sampling time period on the basis of a standard-reaching time point of the popularity participation indicator; sampling the popularity participation indicator on the basis of the popularity sampling time period to obtain a popularity prediction indicator; and adjusting the data transmission mode for the live broadcast service according to the popularity prediction indicator.

According to the embodiment of the second aspect of the present application, a system for live broadcast data transmission comprises: a live broadcast start module is configured to start a live broadcast service for a target user on the basis of a data transmission mode of unicast type; a popularity detection module is configured to detect a popularity participation indicator in the live broadcast service, the popularity participation indicator reflects the participation degree of the target user in the live broadcast service; a sampling configuration module is configured to when the popularity participation indicator meets a preset standard-reaching condition, set a popularity sampling time period on the basis of a standard-reaching time point of the popularity participation indicator; a popularity prediction module is configured to sample the popularity participation indicator on the basis of the popularity sampling time period to obtain a popularity prediction indicator; and a data transmission adjustment module is configured to adjust the data transmission mode for the live broadcast service according to the popularity prediction indicator.

According to the third aspect, the embodiment of the present application provides an electronic device comprises: a memory and a processor, the memory stores a computer program, and when executed by the processor, the processor implements the method for live broadcast data transmission recited in any one of the embodiments of the first aspect of the present application.

According to the fourth aspect, the embodiment of the present application provides a computer readable storage medium, which stores a computer program, and when executed by the processor, the processor implements the method for live broadcast data transmission recited in any one of the embodiments of the first aspect of the present application.

## BRIEF DESCRIPTION OF DRAWINGS

FIG. 1 is a flowchart of the method for live broadcast data transmission provided in the embodiment of the present application;

FIG.2 is another flowchart of the method for live broadcast data transmission provided in the embodiment of the present application;

FIG. 3 is another flowchart of the method for live broadcast data transmission provided in the embodiment of the present application;

FIG. 4 is another flowchart of the method for live broadcast data transmission provided in the embodiment of the present application;

FIG. 5 is another flowchart of the method for live broadcast data transmission provided in the embodiment of the present application;

FIG. 6 is another flowchart of the method for live broadcast data transmission provided in the embodiment of the present application;

FIG. 7 is another flowchart of the method for live broadcast data transmission provided in the embodiment of the present application;

FIG. 8 is a module diagram of the system for live broadcast data transmission provided in the embodiment of the present application;

FIG. 9 is a schematic diagram of an electronic device that executes the method for live broadcast data transmission in the embodiment of the present application.

## DETAILED DESCRIPTION

The embodiments of the present application are described in detail below, and examples of the embodiments are shown in the FIGURES, wherein the same or similar reference numerals throughout represent the same or similar elements or elements having the same or similar functions. The embodiments described below with reference to the FIGURES are exemplary and are only used to explain the present application, and cannot be understood as limiting the present application.

In the description of the present application, the meaning of "several" is one or more, the meaning of "multiple" is more than two, "greater than", "less than", "exceed", etc. are understood as not including the number itself, and "above", "below", "within", etc. are understood as including the number itself. If there is a description of "first" and "second", it is only for the purpose of distinguishing the technical features, and it cannot be understood as indicating or implying the relative importance or implicitly indicating the number of the indicated technical features or implicitly indicating the order of the indicated technical features.

In the description of the present application, it should be understood that descriptions involving orientation, such as the orientations or positional relationships of "upper", "lower", "left", "right", "front", "back", etc., are based on the orientations or positional relationships shown in the FIGURES, and are only for the convenience of describing the present application and simplifying the description, and do not indicate or imply that the device or element referred to must have a specific orientation, be constructed and operated in a specific orientation, and therefore should not be understood as a limitation on the present application.

In the description of this specification, the description with reference to the terms "an embodiment", "some embodiments", "illustrative embodiments", "examples", "specific examples", or "some examples" etc., means that the specific features, structures, materials, or characteristics described in conjunction with the embodiments or examples are included in at least one embodiment or example of the present application. In this specification, the schematic representation of the above terms does not necessarily refer to the same embodiment or example. Moreover, the specific features, structures, materials, or characteristics described may be combined in any one or more embodiments or examples in a suitable manner.

In the description of this application, unless otherwise clearly defined, the terms such as "setting", "installing", "connecting", etc. should be understood in a broad sense, and those skilled in the art can reasonably determine the specific meanings of the above terms in the present application in combination with the specific content of the technical solution. In addition, the identification of specific steps below does not represent a limitation on the order of steps and execution logic, the execution order and execution logic between each step should be understood and inferred with reference to the contents described in the embodiments.

With the rapid development of science and technology, video live broadcast has become an important part of people's daily life. At present, in order to distribute the live broadcast data, video live broadcast service (including traditional video live broadcast service and new Internet live broadcast service) need to pre-formulate a live broadcast data distribution strategy before the start of the live broadcast, so as to complete the distribution of live broadcast data according to the pre-formulated strategy. In the pre-formulated live broadcast data distribution strategy of the related technology, unicast transmission mode or multicast transmission mode is generally selected based on the predicted number of viewing users, the two types of transmission modes cannot be switched during the live broadcast data transmission process due to mutual isolation. Therefore, since the number of viewing users cannot be accurately estimated before the live broadcast begins, there is often a mismatch between the live broadcast data transmission mode and the number of viewing users during the distribution and live broadcast data transmission, resulting in a waste of network resources. Therefore, how to make full use of network resources during the live broadcast data transmission is becoming an urgent problem to be solved by industry insiders.

The present application proposes a method for live broadcast data transmission, which can fully utilize network resources during the live broadcast data transmission.

The following is a description with reference to the FIGURES.

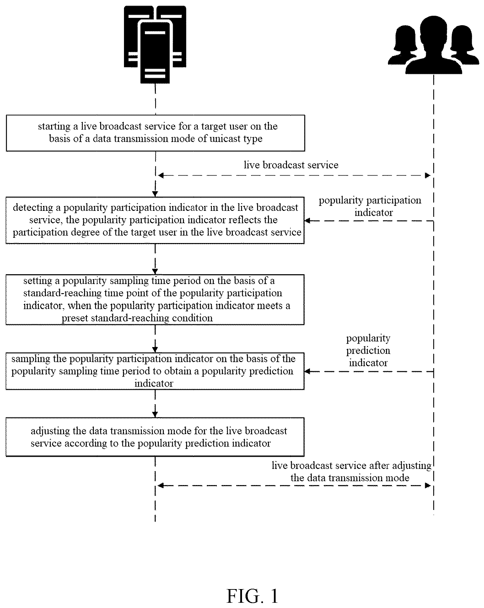

Referring to FIG. 1, according to the embodiment of the first aspect of the present application, a method for live broadcast data transmission comprises:

Step S101, starting a live broadcast service for a target user on the basis of a data transmission mode of unicast type;

According to some embodiments provided by the present application, unicast refers to a one-to-one communication mode between hosts, the devices in the network (such as routers and switches) select the transmission path according to the destination address contained in the network message, transmit the unicast message to the specified destination, and only forward the received data without copying. It can respond to each host in a timely manner. It should be understood that since the data transmission mode of unicast type can respond to each client in a timely manner, most web browsing is done in the form of IP unicast protocol. The data transmission mode of unicast type is a point-to-point connection between the client and the server. "Point-to-point" means that each user terminal receives the remote stream from the server side, therefore, unicast is a communication between a single sender and a single receiver through the network, which can be applied to fields such as communications and computers, and multicast and unicast hybrid algorithms can also be used to solve practical problems. In some exemplary embodiments, if 10 user terminals (terminals used by target users) need the same data, the server side needs to transmit 10 copies of the same data to the 10 user terminals one by one, that is, repeating the work of data transmission with the same content but different data transmission objects 10 times.

According to some embodiments provided by the present application, the target user refers to the audience corresponding to the live broadcast service provided by the server, and the user terminal used by the target user in the live broadcast service scenario is the host which receiving the live broadcast data, so the method for live broadcast data transmission mainly refers to the live broadcast data transmission between the server and the user terminal. When the live broadcast service is just started, the number of user terminals accessed is small and the target users have a low participation degree for the live broadcast, therefore, the data transmission mode based on unicast type can meet the needs of a small number of target users to participate in the live broadcast. It should be clear that the data transmission mode of multicast type requires pre-construction, operation and maintenance of the multicast network, in addition, the data transmission mode of broadcast type requires to send data packets to all devices in the same broadcast domain or subnet, and also requires construction, operation and maintenance of the broadcast domain or subnet. Therefore, if the target users participating in the live broadcast process cannot reach the ideal number, the construction cost, operation cost and maintenance cost of the multicast network, broadcast domain or subnet will be unnecessary, so this unnecessary cost will result in the inability to fully utilize network resources during the live broadcast data transmission. According to some feasible implementation of the present application, when the live broadcast service is just started, the live broadcast service is started to the target user based on the data transmission mode of unicast type, if the participation degree of the target user increases, adjust the data transmission mode of the live broadcast service from the unicast type to other types in the subsequent steps to fully utilize the network resources during the live broadcast data transmission process.

Step S102, detecting a popularity participation indicator in the live broadcast service, the popularity participation indicator reflects the participation degree of the target user in the live broadcast service;
According to some embodiments provided by the present application, live broadcast popularity refers to the traffic formed by the number of viewers, the amount of bullet screens, the amount of gifts, and other indicators in the live broadcast room when the anchor starts broadcasting. The popularity participation indicator refers to an indicator that reflects the participation degree of the target user in the live broadcast service, such as the number of viewers, the amount of bullet screens, the amount of gifts, and other indicators in the live broadcast room. In some exemplary embodiments of the present application, the purpose of detecting the popularity participation indicator in the live broadcast service is to quantitatively or qualitatively analyze the participation degree of the target user in the live broadcast process based on the popularity participation indicator, so as to obtain the popularity prediction indicator and determine how to adjust the data transmission mode of the live broadcast service based on the popularity prediction indicator, so as to make full utilize of the network resources in the live broadcast data transmission process.

Step S103, setting a popularity sampling time period on the basis of a standard-reaching time point of the popularity participation indicator, when the popularity participation indicator meets a preset standard-reaching condition;

Step S104, sampling the popularity participation indicator on the basis of the popularity sampling time period to obtain a popularity prediction indicator;

According to some embodiments provided by the present application, the preset standard-reaching condition refers to a condition preset for determining whether the participation degree of target user in the live broadcast process has met the expected level, and the standard-reaching time point refers to the time point corresponding to the popularity participation indicator that meeting the preset standard-reaching condition, in addition, the popularity sampling time period is the time period for sampling the popularity participation indicator. It should be understood that the preset standard-reaching condition can be flexibly set according to the application scenario or live broadcast service requirements before the method for live broadcast data transmission is executed. In some feasible implementations of the present application, when the popularity participation indicator meets the preset standard-reaching condition, it means that the participation degree of target user in the live broadcast process reaches the expected level, therefore, the popularity prediction indicator can be sampled to obtain the popularity prediction indicator to adjust the data transmission mode of the live broadcast service.

According to some embodiments provided by the present application, the popularity prediction indicator refers to an indicator obtained by sampling the popularity participation indicator and used to predict the trend of the change in the participation degree of the target user during the live broadcast. In some feasible implementations of the present application, when the popularity participation indicator meets the preset standard-reaching condition, it means that the participation degree of the target user in the live broadcast process reaches the expected level, therefore, the popularity sampling time period can be set based on the standard-reaching time point of the popularity participation indicator, and then the popularity participation indicator is sampled in the popularity sampling time period to obtain the popularity prediction indicator, so as to adjust the data transmission mode of the live broadcast service. It should be clarified that setting the popularity sampling time period based on the standard-reaching time point of the popularity participation indicator means determining the sampling start time corresponding to the popularity sampling time period according to the standard-reaching time point of the popularity participation indicator, in some exemplary embodiments, the standard-reaching time point of the popularity participation indicator is directly determined as sampling start time, to start sampling the popularity participation indicator. In other embodiments, the sampling start time can also be determined after a preset time interval after the standard-reaching time point of the popularity participation indicator, it should be understood that there are various ways to determine the sampling start time corresponding to the popularity sampling time period according to the standard-reaching time point of the popularity participation indicator, which may include, but not limited to, the specific embodiments listed above. The sampling end time corresponding to the popularity sampling time period can be set in various ways, for example, a preset sampling duration can be set in advance, and the preset sampling duration is calculated from the sampling start time, and then reaching the sampling end time to obtain the popularity prediction indicator; for another example, the popularity participation indicator can be sampled as the live broadcast service progresses until the live broadcast service ends, and then reaching the sampling end time to obtain the popularity prediction indicator. It should be clarified that in the method for live broadcast data transmission of the present application, a popularity sampling time period is set based on the standard-reaching time point of the popularity participation indicator, and then the popularity participation indicator is sampled based on the popularity sampling time period, to obtain the popularity prediction indicator, which are various ways, and may include, but not be limited to, the specific embodiments listed above.

Step S105, adjusting the data transmission mode for the live broadcast service according to the popularity prediction indicator.

According to some embodiments provided by the present application, multicast is a one-to-many communication mode between hosts, multicast is a technology that allows one or more multicast sources to send the same message to multiple receivers. The multicast source sends a message to a specific multicast address, the multicast address is different from the unicast address, it does not belong to a specific host, but to a group of hosts, this group of hosts is in the same multicast network, a multicast address represents a group in the multicast network, all receivers who need to receive multicast messages join this group. Multicast is a "one-to-one group" communication mode between hosts, hosts that have joined the same group in the same multicast network can receive all the data in this group, the switches and routers in the network only copy and forward the required data to those that in need, in addition, the host can request to join or leave a group from the router, the routers and switches in the network selectively copy and transmit data, that is, the data in the group is only transmitted to the hosts that have joined the group, in this way, data can be transmitted to multiple hosts that in need (that is, hosts that have joined the group) at one time, while ensuring that other communications of other unnecessary hosts (that is, hosts that have not yet joined the group) are not affected.

According to some embodiments provided by the present application, broadcast is a one-to-all communication mode between hosts, the device will send the message to all possible receivers in the network, the broadcast processing flow is simple and does not require path selection. A data message needs to use a broadcast address as the destination address when it is transmitted by broadcast, the data source sends only one message to the broadcast address corresponding to the present network segment, broadcast transmission will send the data message to all target users in the present network segment, regardless of whether the target users have demand. When data messages are transmitted via multicast, data messages are only sent to target users with data needs, not to all target users. It should be understood that the data source of broadcast transmission must be in the same network segment as the target user, while multicast can be transmitted across network segments. In broadcast transmission, all hosts in the network segment can receive data messages, which will cause hosts without information demand also receive the information, there is traffic redundancy in the network, while multicast transmission only transmits data streams to places with receivers, there is no traffic redundancy in the network, therefore, the advantage of multicast over broadcast is that messages of multicast are sent on demand.

According to some embodiments provided by the present application, the data transmission mode of the live broadcast service may include, but is not limited to, the data transmission mode of unicast type, data transmission mode of the multicast type and the data transmission mode of the broadcast type mentioned above. It should be understood that the use of network resources by live broadcast services will have different characteristics under different data transmission modes. For example, in the data transmission mode of unicast type, the server can make a timely response to each user terminal, therefore, when the number of user terminals establishing communication with the server is small, the data transmission mode of unicast type is a more suitable data transmission mode for live broadcast services; For another example, when the number of user terminals establishing communication with the server is large, multiple identical flows will appear in the data transmission network, and the data to be transmitted will occupy a large amount of processor resources and waste the bandwidth used for data transmission in the network, however, if the live broadcast data is transmitted by multicast, only a few or even one data stream is needed in each link between the server and the multicast network to complete the transmission of the live broadcast data, therefore, when there are a large number of user terminals that establish communication with the server, the advantage of multicast over unicast is that the same message has at most one copy on each link, which can make more full use of network resources in the live broadcast data transmission process. Broadcast transmission will send data messages to all target users in the same network segment, regardless of whether the target users have demand for it, which can be used as a data transmission mode for live broadcast services in specific service scenarios.

It should be understood that the target user refers to the audience corresponding to the live broadcast service provided by the server, and the user terminal used by the target user in the live broadcast service scenario is the host which receiving the live broadcast data, so the method for live broadcast data transmission mainly refers to the live broadcast data transmission between the server and the user terminal. In order to make full use of network resources during the live broadcast data transmission process, according to some exemplary embodiments of the present application, when the live broadcast service is just started, the number of user terminals accessed is small and the target users have a low participation degree for the live broadcast, therefore, the data transmission mode based on unicast type can meet the needs of a small number of target users to participate in the live broadcast. It should be clear that the data transmission mode of multicast type requires pre-construction, operation and maintenance of the multicast network, in addition, the data transmission mode of broadcast type requires to send data packets to all devices in the same broadcast domain or subnet, and also requires construction, operation and maintenance of the broadcast domain or subnet. Therefore, if the target users participating in the live broadcast process cannot reach the ideal number, the construction cost, operation cost and maintenance cost of the multicast network, broadcast domain or subnet will be unnecessary, so this unnecessary cost will result in the inability to fully utilize network resources during the live broadcast data transmission. According to some feasible implementation of the present application, when the live broadcast service is just started, the live broadcast service is started to the target user based on the data transmission mode of unicast type, in the process of providing live broadcast services, the server needs to detect the popularity participation indicator in the live broadcast service, where the popularity participation indicator reflects the participation degree of the target user in the live broadcast service, when the popularity participation indicator meets the preset standard-reaching condition, it means that the participation degree of target user in the live broadcast process has reached the expected level, therefore, setting a popularity sampling time period on the basis of a standard-reaching time point of the popularity participation indicator, and then sampling the popularity participation indicator on the basis of the popularity sampling time period to obtain a popularity prediction indicator, so as to adjust the data transmission mode for the live broadcast service, for example, adjusting the data transmission mode of unicast type to the data transmission mode of multicast type, on the basis of building, operating and maintaining the multicast network, the live broadcast data transmission can be completed by relying on only a few or even one data stream in each link between the server and the multicast network, thereby making full use of the network resources in the live broadcast data transmission process.

In the method for live broadcast data transmission of the embodiment of the present application, it is necessary to start a live broadcast service for a target user on the basis of a data transmission mode of unicast type, and then detect a popularity participation indicator in the live broadcast service, the popularity participation indicator reflects the participation degree of the target user in the live broadcast service. In some embodiments, when the popularity participation indicator meets a preset standard-reaching condition, setting a popularity sampling time period on the basis of a standard-reaching time point of the popularity participation indicator. In some embodiments, sampling the popularity participation indicator on the basis of the popularity sampling time period to obtain a popularity prediction indicator, and finally adjusting the data transmission mode for the live broadcast service according to the popularity prediction indicator. The method for live broadcast data transmission of the present application setting a popularity sampling time period on the basis of a standard-reaching time point of the popularity participation indicator after the popularity participation indicator meets a preset standard-reaching condition, and sampling the popularity participation indicator in the popularity sampling time period to obtain a popularity prediction indicator, therefore, the data transmission mode for the live broadcast service can be reasonably adjusted according to the popularity prediction indicator, so that the method for live broadcast data transmission of the present application can make full use of network resources during the transmission of the live broadcast data.

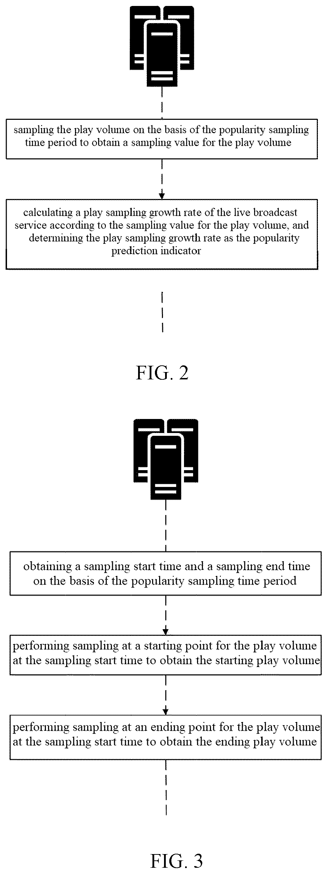

Referring to FIG. 2, according to some embodiments of the present application, the popularity participation indicator is the play volume for the live broadcast service, and sampling the popularity participation indicator on the basis of the popularity sampling time period to obtain the popularity prediction indicator comprising:

Step S201, sampling the play volume on the basis of the popularity sampling time period to obtain a sampling value for the play volume;

Step S202, calculating a play sampling growth rate of the live broadcast service according to the sampling value for the play volume, and determining the play sampling growth rate as the popularity prediction indicator.

According to some embodiments provided by the present application, the popularity participation indicator refers to an index reflects the participation degree of the target user in the live broadcast service, such as the number of viewers, the amount of bullet screens, the amount of gifts, and other indicators in the live broadcast room. **In** some exemplary embodiments of the present application, when the popularity participation indicator is the play volume for the live broadcast service, sampling the play volume for the live broadcast service to obtain the sampling value for the play volume as the popularity prediction indicator. **In** some exemplary embodiments of the present application, sampling the play volume on the basis of the popularity sampling time period to obtain a sampling value for the play volume refers to the change volume in the play volume for the live broadcast service within the popularity sampling time period, it should be understood that the play sampling growth rate is calculated based on the duration of the popularity sampling time period and the changes in the sampling value for the play volume within the popularity sampling time period , which can reflect the changing trend of the play volume for the live broadcast service within the popularity sampling time period, therefore, determining the play sampling growth rate as the popularity prediction indicator can be used to predict the changing trend of the participation degree of target user during the live broadcast process.

Referring to FIG. 3, according to some embodiments of the present application, the sampling value for the play volume comprises a starting play volume x and an ending play volume y, and sampling the play volume on the basis of the popularity sampling time period to obtain the sampling value for the play volume comprising:

Step S301, obtaining a sampling start time $t_x$ and a sampling end time $t_y$ on the basis of the popularity sampling time period;
Step S302, performing sampling at a starting point for the play volume at the sampling start time $t_x$ to obtain the starting play volume x;
Step S303, performing sampling at an ending point for the play volume at the sampling start time $t_y$ to obtain the ending play volume y.

It should be emphasized that the popularity sampling time period is the time period for sampling the popularity participation indicator. When the popularity participation indicator is the play volume for the live broadcast service, the play volume for the live broadcast service is sampled based on the popularity sampling time period. In some exemplary embodiments provided by the present application, the standard-reaching time point of the popularity participation indicator is directly determined as the sampling start time $t_x$ to start sampling the popularity participation indicator. The sampling end time $t_y$ corresponding to the popularity sampling time period can be set in various ways, for example, a preset sampling duration can be set in advance, the preset sampling duration is calculated from the sampling start time $t_x$, and then reaching the sampling end time $t_y$ to obtain the play growth of live broadcast service during the popularity sampling time period; for another example, the popularity participation indicator can be sampled as the live broadcast service progresses until the live broadcast service ends, and then reaching the sampling end time $t_y$ to obtain the play growth of live broadcast service during the popularity sampling time period. It should be clarified that in the method for live broadcast data transmission of the present application, there are various ways to obtain the sampling start time $t_x$ and the sampling end time $t_y$, which may include, but are not limited to, the specific embodiments listed above. It should be understood that there are many ways to perform sampling based on the

sampling start time $t_x$ and the sampling end time $t_y$, for example, within the popularity sampling time period, starting from the sampling start time $t_x$, sampling is performed once every certain time period until the last sampling is performed at the sampling end time $t_y$, wherein the multiple time intervals can be equal or different, therefore, based on the changes in the play volume collected between the sampling start time $t_x$ and the sampling end time $t_y$, the play sampling growth rate can be calculated; for another example, within the popularity sampling time period, one starting point sampling is performed at the sampling start time $t_x$ to obtain the starting play volume x, and then one ending point sampling is performed at the sampling end time $t_y$ to obtain the ending play volume y, therefore, based on the changes in the play volume between the starting play volume x and the ending play volume y, the play sampling growth rate can be calculated. It should be understood that since the popularity sampling time period is a continuous time period, after the starting play volume x sampled at the starting play volume x and the ending play volume y sampled at the sampling end time $t_y$, the play sampling growth rate, which reflects the changing trend of the play volume for the live broadcast service within the popularity sampling time period, can be calculated based on the starting play volume x, the ending play volume y and the popularity sampling time period. It should be understood that there are various ways to sample the play volume for the live broadcast service based on the popularity sampling time period, which may include, but not be limited to, the specific embodiments listed above.

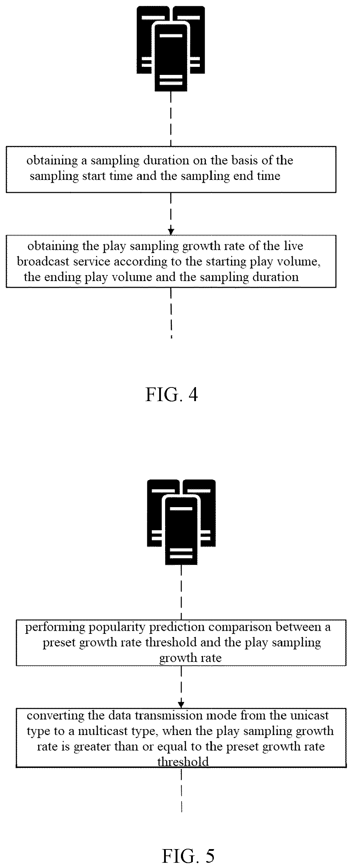

Referring to FIG. 4, according to some embodiments of the present application, calculating the play sampling growth rate of the live broadcast service according to the sampling value for the play volume comprising:

> Step S401, obtaining a sampling duration t on the basis of the sampling start time $t_x$ and the sampling end time $t_y$, where the sampling duration $t = t_y - t_x$;
>
> Step S402, obtaining the play sampling growth rate f(x, y, t) of the live broadcast service according to the starting play volume x, the ending play volume y and the sampling duration t, where the play sampling growth rate
>
> $$f(x, y, t) = [(\tfrac{y}{x})^{\frac{1}{t-1}} - 1] * 100\%$$

According to some embodiments provided in the present application, the difference between the popularity sampling time period and the sampling duration t is that the popularity sampling time period reflects the time period between the sampling start time $t_x$ and the sampling end time $t_y$, while the sampling duration t represents the length of time spent between the sampling start time $t_x$ and the sampling end time $t_y$. For example, if the sampling start time $t_x$ is 19:45 and the sampling end time $t_y$ is 19:57, then the popularity sampling time period refers to the time period from 19:45 to 19:57, and the sampling duration t refers to the spent 12 minutes from 19:45 to 19:57. In some exemplary embodiments of the present application, after obtaining a sampling duration t on the basis of the sampling start time $t_x$ and the sampling end time $t_y$, and then obtaining the play sampling growth rate f(x, y, t) of the live broadcast service according to the starting play volume x, the ending play volume y and the sampling duration t, where the play sampling growth rate

$$f(x, y, t) = [(\tfrac{y}{x})^{\frac{1}{t-1}} - 1] *$$
100%.

Referring to FIG. 5, according to some embodiments of the present application, adjusting the data transmission mode for the live broadcast service according to the popularity prediction indicator comprising:

> Step S501, performing popularity prediction comparison between a preset growth rate threshold and the play sampling growth rate;
> Step S502, converting the data transmission mode from the unicast type to a multicast type, when the play sampling growth rate is greater than or equal to the preset growth rate threshold.

According to some embodiments provided by the present application, the play sampling growth rate is calculated based on the duration of the popularity sampling time period and the change of the sampling value for the play volume within the popularity sampling time period, so the play sampling growth rate can reflect the change trend of the play volume for the live broadcast service within the popularity sampling time period. According to some exemplary embodiments of the present application, the play sampling growth rate is

$$f(x, y, t) = [(\tfrac{y}{x})^{\frac{1}{t-1}} - 1] * 100\%,$$ where the play sampling growth rate f(x, y, t) can reflect the changing trend of the sampling value for the play volume within the sampling duration t, the larger the play sampling growth rate f(x, y, t) is, the more changes of sampling value for the play volume within the sampling duration t. Therefore, in some feasible implementations of the present application, it is necessary to perform popularity prediction comparison between a preset growth rate threshold and the play sampling growth rate, when the play sampling growth rate is greater than or equal to the preset growth rate threshold, it means that the change trend of the sampling value for the play volume within the sampling duration t is sufficiently drastic, and the popularity of the live broadcast service is rising rapidly, and determined that the number of user terminals that establish communication with the server will reach the expected level, therefore, the data transmission mode is converted from unicast type to multicast type, so that only a few or even one data stream is needed in each link between the server and the multicast network to complete the transmission of the live broadcast data, thereby avoiding the data to be transmitted occupying a large amount of processor resources and wasting the bandwidth used for data transmission in the network, and making full use of network resources in the live broadcast data transmission process.

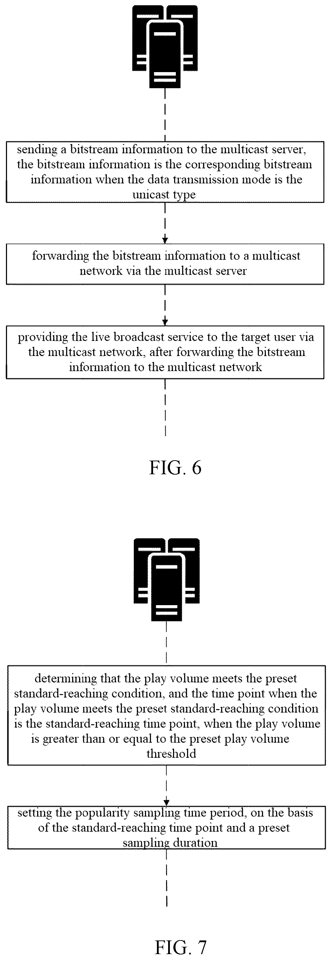

Referring to FIG. 6, according to some embodiments of the present application, converting the data transmission mode from the unicast type to a multicast type comprising:

Step S601, sending a bitstream information to the multicast server, the bitstream information is the corresponding bitstream information when the data transmission mode is the unicast type;

Step S602, forwarding the bitstream information to a multicast network via the multicast server;

Step S603, providing the live broadcast service to the target user via the multicast network, after forwarding the bitstream information to the multicast network.

According to some embodiments provided by the present application, in the process of converting the data transmission mode from unicast type to multicast type, it is necessary to undertake the bitstream information transmitted in unicast type, therefore, in some exemplary embodiments, when the data transmission mode is the unicast type, sending the corresponding bitstream information to the multicast server, then forwarding the bitstream information to a multicast network via the multicast server, finally providing the live broadcast service to the target user via the multicast network. It should be understood that forwarding the bitstream information to a multicast network via the multicast server, and then providing the live broadcast service to the target user via the multicast network, which can fully utilize network resources during the live broadcast data transmission process while ensuring the continuous supply of the live broadcast service.

Referring to FIG. 7, according to some embodiments of the present application, when the popularity participation indicator meets the preset standard-reaching condition, setting the popularity sampling time period on the basis of the standard-reaching time point of the popularity participation indicator comprising:

Step S701, determining that the play volume meets the preset standard-reaching condition, and the time point when the play volume meets the preset standard-reaching condition is the standard-reaching time point, when the play volume is greater than or equal to the preset play volume threshold;

Step S702, setting the popularity sampling time period, on the basis of the standard-reaching time point and a preset sampling duration.

According to some embodiments provided in the present application, the preset standard-reaching condition refers to a condition preset for determining whether the participation degree of target user in the live broadcast process has met the expected level, and the standard-reaching time point refers to the time point corresponding to the popularity participation indicator that meeting the preset standard-reaching condition. It should be understood that the preset standard-reaching condition can be flexibly set according to the application scenario or live broadcast service requirements before the method for live broadcast data transmission is executed. In some feasible implementations of the present application, the popularity participation indicator is the play volume for the live broadcast service, and when the play volume is greater than or equal to the preset play volume threshold, determining that the play volume meets the preset standard-reaching condition, wherein the time point when the play volume meets the preset standard-reaching condition is the standard-reaching time point. In some embodiments, on the basis of the standard-reaching time point and a preset sampling duration, setting the popularity sampling time period. It should be clarified that the preset play volume threshold refers to a pre-set threshold used to determine whether the play volume for the live broadcast service has reached the expected level, when the play volume is greater than or equal to the preset play volume threshold, it means that the participation degree of target user has reached a high level, therefore, setting the popularity sampling time period at this time, and sampling the play volume for the live broadcast service within the popularity sampling time period to obtain the popularity prediction indicator, and reasonably adjusting the data transmission mode of the live broadcast service according to the popularity prediction indicator, so that the method for live broadcast data transmission of the present application can make full use of network resources during the live broadcast data transmission. In some exemplary embodiments, the standard-reaching time point of the play volume for the live broadcast service can be directly determined as the sampling start time to start sampling the play volume for the live broadcast service, in other embodiments, the sampling start time can also be determined after a preset time interval after the standard-reaching time point of the play volume for the live broadcast service, it should be understood that there are various ways to determine the sampling start time corresponding to the popularity sampling time period according to the standard-reaching time point of the play volume for the live broadcast service, which may include, but not limited to, the specific embodiments listed above. The sampling end time corresponding to the popularity sampling time period can be set in various ways, for example, a preset sampling duration can be set in advance, and the preset sampling duration is calculated from the sampling start time, and then reaching the sampling end time to obtain the popularity prediction indicator; for another example, the play volume for the live broadcast service can be sampled as the live broadcast service progresses until the live broadcast service ends, and then reaching the sampling end time to obtain the popularity prediction indicator. It should be clarified that in the method for live broadcast data transmission of the present application, there are various ways setting the popularity sampling time period based on the standard-reaching time point of the play volume for the live broadcast service, and then sampling the play volume for the live broadcast service based on the popularity sampling time period to obtain the popularity prediction indicator, which are various ways, and may include, but not be limited to, the specific embodiments listed above.

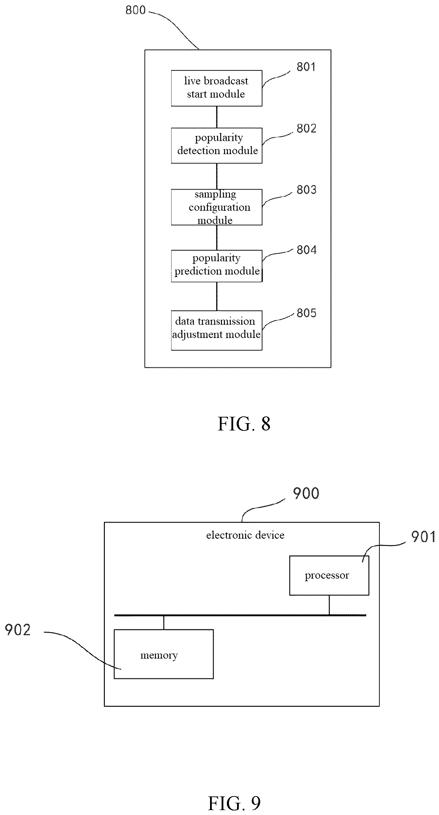

Referring to FIG. 8, according to the embodiment of the second aspect of the present application, a system 800 for live broadcast data transmission comprises:

a live broadcast start module 801, configured to start a live broadcast service for a target user on the basis of a data transmission mode of unicast type;

a popularity detection module 802, configured to detect a popularity participation indicator in the live broadcast service, the popularity participation indicator reflects the participation degree of the target user in the live broadcast service;

a sampling configuration module 803, configured to when the popularity participation indicator meets a preset standard-reaching condition, set a popularity sampling time period on the basis of a standard-reaching time point of the popularity participation indicator;

a popularity prediction module 804, configured to sample the popularity participation indicator on the basis of the popularity sampling time period to obtain a popularity prediction indicator;

a data transmission adjustment module 805, configured to adjust the data transmission mode for the live broadcast service according to the popularity prediction indicator.

FIG. 9 shows an electronic device 900 provided in the embodiment of the present application. The electronic device 900 comprises: a memory 901 and a processor 902, a computer program stored in the memory 902 and executable on the processor 901, and the computer program is used to execute the above-mentioned method for live broadcast data transmission when it is executed.

The processor 901 and the memory 902 may be connected via a bus or other means.

The memory 902 is a non-transitory computer-readable storage medium that can be used to store non-transitory software programs and non-transitory computer executable programs, such as a method for live broadcast data transmission described in an embodiment of the present application. The processor 901 implements the above-mentioned method for live broadcast data transmission by running the non-transitory software programs and instructions stored in the memory 902.

The memory 902 may include a program storage area and a data storage area, wherein the program storage area may store an operating system and application programs required for at least one function. The data storage area may store and execute the method for live broadcast data transmission described above. In addition, the memory 902 may include a high-speed random access memory 902, and may also include a non-transitory memory 902, such as at least one storage device, a flash memory device, or other non-transitory solid-state storage device. In some embodiments, the memory 902 may optionally include a memory 902 remotely disposed relative to the processor 901, and these remote memories 902 may be connected to the electronic device 900 via a network. Examples of the above-mentioned network include, but are not limited to, the Internet, an intranet, a local area network, a mobile communication network, and combinations thereof.

The non-transitory software program and instructions required to implement the above-mentioned method for live broadcast data transmission are stored in the memory 902, when executed by one or more processors 901, the above-mentioned method for live broadcast data transmission is executed, for example, method steps S101 to S105 in FIG. 1, method steps S201 to S202 in FIG. 2, method steps S301 to S303 in FIG. 3, method steps S401 to S402 in FIG. 4, method steps S501 to S502 in FIG. 5, method steps S601 to S603 in FIG. 6, and method steps S701 to S702 in FIG. 7.

The embodiment of the present application also provides a computer readable storage medium storing computer-executable instructions, and the computer-executable instructions are used to execute the above-mentioned method for live broadcast data transmission.

In one embodiment, the computer readable storage medium stores computer-executable instructions, which are executed by one or more control processors, for example, executing method steps S101 to S105 in FIG. 1, method steps S201 to S202 in FIG. 2, method steps S301 to S303 in FIG. 3, method steps S401 to S402 in FIG. 4, method steps S501 to S502 in FIG. 5, method steps S601 to S603 in FIG. 6, and method steps S701 to S702 in FIG. 7.

In the method for live broadcast data transmission of the embodiment of the present application, it is necessary to start a live broadcast service for a target user on the basis of a data transmission mode of unicast type, and then detect a popularity participation indicator in the live broadcast service, the popularity participation indicator reflects the participation degree of the target user in the live broadcast service. When the popularity participation indicator meets a preset standard-reaching condition, setting a popularity sampling time period on the basis of a standard-reaching time point of the popularity participation indicator. Sampling the popularity participation indicator on the basis of the popularity sampling time period to obtain a popularity prediction indicator, and finally adjusting the data transmission mode for the live broadcast service according to the popularity prediction indicator. The method for live broadcast data transmission of the present application setting a popularity sampling time period on the basis of a standard-reaching time point of the popularity participation indicator after the popularity participation indicator meets a preset standard-reaching condition, and sampling the popularity participation indicator in the popularity sampling time period to obtain a popularity prediction indicator, therefore, the data transmission mode for the live broadcast service can be reasonably adjusted according to the popularity prediction indicator, so that the method for live broadcast data transmission of the present application can make full use of network resources during the transmission of the live broadcast data.

The device embodiments described above are merely illustrative, in which the units described as separate components may or may not be physically separated, that is, they may be located in one place, or they may be distributed to multiple network units. Some or all of the modules may be selected according to actual needs to achieve the purpose of the present embodiment.

It will be understood by those skilled in the art that all or some of the steps and systems in the methods disclosed above may be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on computer-readable medium, which may include computer storage medium (or non-transitory medium) and communication medium (or transitory medium). As known to those skill in the art, the term "computer storage medium" includes volatile and non-volatile, removable and non-removable medium implemented in any method or technology for storing information (such as computer-readable instructions, data structures, program modules or other data). Computer storage medium include, but are not limited to, RAM, ROM, EEPROM, flash memory or other memory technology, CD-ROM, digital versatile disk (DVD) or other optical disk storage, magnetic cassettes, tapes, storage device or other magnetic storage devices, or any other medium that can be used to store the desired information and can be accessed by a computer. In addition, it is well known to those skilled in the art that communication medium generally includes computer-readable instructions, data structures, program modules, or other data in modulated data signals such as carrier waves or other transmission mechanisms, and may include any information delivery medium. It should also be understood that the various implementations provided in the embodiments of the present application can be arbitrarily combined to achieve different technical effects.

## Claims

1. A method for live broadcast data transmission, comprising:

   starting a live broadcast service for a target user on the basis of a data transmission mode of unicast type;
   detecting a popularity participation indicator in the live broadcast service, the popularity participation indicator reflects the participation degree of the target user in the live broadcast service;
   setting a popularity sampling time period on the basis of a standard-reaching time point of the popularity participation indicator, when the popularity participation indicator meets a preset standard-reaching condition;
   sampling the popularity participation indicator on the basis of the popularity sampling time period to obtain a popularity prediction indicator;
   adjusting the data transmission mode for the live broadcast service according to the popularity prediction indicator.

2. According to the method of claim 1, wherein the popularity participation indicator is the play volume for the live broadcast service, and sampling the popularity participation indicator on the basis of the popularity sampling time period to obtain the popularity prediction indicator comprising:

   sampling the play volume on the basis of the popularity sampling time period to obtain a sampling value for the play volume;
   calculating a play sampling growth rate of the live broadcast service according to the sampling value for the play volume, and determining the play sampling growth rate as the popularity prediction indicator.

3. According to the method of claim 2, wherein the sampling value for the play volume comprises a starting play volume x and an ending play volume y, and sampling the play volume on the basis of the popularity sampling time period to obtain the sampling value for the play volume comprising:

obtaining a sampling start time $t_x$ and a sampling end time $t_y$ on the basis of the popularity sampling time period;

performing sampling at a starting point for the play volume at the sampling start time $t_x$ to obtain the starting play volume x;

performing sampling at an ending point for the play volume at the sampling start time $t_y$ to obtain the ending play volume y.

4. According to the method of claim 3, wherein calculating the play sampling growth rate of the live broadcast service according to the sampling value for the play volume comprising:

obtaining a sampling duration t on the basis of the sampling start time $t_x$ and the sampling end time $t_y$, wherein the sampling duration $t = t_y - t_x$;

obtaining the play sampling growth rate f(x, y, t) of the live broadcast service according to the starting play volume x, the ending play volume y and the sampling duration t, wherein the play sampling growth rate

$$f(x, y, t) = [(\tfrac{y}{x})^{\tfrac{1}{t-1}} - 1] * 100\%$$

5. According to the method of any one of claims 2 to 4, wherein adjusting the data transmission mode for the live broadcast service according to the popularity prediction indicator comprising:

performing popularity prediction comparison between a preset growth rate threshold and the play sampling growth rate;

converting the data transmission mode from the unicast type to a multicast type, when the play sampling growth rate is greater than or equal to the preset growth rate threshold.

6. According to the method of claim 5, wherein converting the data transmission mode from the unicast type to a multicast type comprising:

sending a bitstream information to the multicast server, the bitstream information is the corresponding bitstream information when the data transmission mode is the unicast type;

forwarding the bitstream information to a multicast network via the multicast server;

providing the live broadcast service to the target user via the multicast network, after forwarding the bitstream information to the multicast network.

7. According to the method of claim 2, wherein when the popularity participation indicator meets the preset standard-reaching condition, setting the popularity sampling time period on the basis of the standard-reaching time point of the popularity participation indicator comprising:

determining that the play volume meets the preset standard-reaching condition, and the time point when the play volume meets the preset standard-reaching condition is the standard-reaching time point, when the play volume is greater than or equal to the preset play volume threshold;

setting the popularity sampling time period, on the basis of the standard-reaching time point and a preset sampling duration.

8. A system for live broadcast data transmission comprises:

a live broadcast start module is configured to start a live broadcast service for a target user on the basis of a data transmission mode of unicast type;

a popularity detection module is configured to detect a popularity participation indicator in the live broadcast service, the popularity participation indicator reflects the participation degree of the target user in the live broadcast service;

a sampling configuration module is configured to when the popularity participation indicator meets a preset standard-reaching condition, set a popularity sampling time period on the basis of a standard-reaching time point of the popularity participation indicator;

a popularity prediction module is configured to sample the popularity participation indicator on the basis of the popularity sampling time period to obtain a popularity prediction indicator;

a data transmission adjustment module is configured to adjust the data transmission mode for the live broadcast service according to the popularity prediction indicator.

9. An electronic device comprises: a memory and a processor, the memory stores a computer program, and when executed by the processor, the processor implements the method for live broadcast data transmission according to any one of claims 1 to 7.

10. A computer readable storage medium, which stores a computer program, and when executed by the processor, the processor implements the method for live broadcast data transmission according to any one of claims 1 to 7.

starting a live broadcast service for a target user on the
basis of a data transmission mode of unicast type

live broadcast service

detecting a popularity participation indicator in the live broadcast
service, the popularity participation indicator reflects the
participation degree of the target user in the live broadcast service

popularity participation
indicator

setting a popularity sampling time period on the basis of a
standard-reaching time point of the popularity participation
indicator, when the popularity participation indicator meets a
preset standard-reaching condition

popularity
prediction
indicator

sampling the popularity participation indicator on the basis of the
popularity sampling time period to obtain a popularity prediction
indicator

adjusting the data transmission mode for the live broadcast
service according to the popularity prediction indicator

live broadcast service after adjusting
the data transmission mode

FIG. 1

sampling the play volume on the basis of the popularity sampling
time period to obtain a sampling value for the play volume

calculating a play sampling growth rate of the live broadcast
service according to the sampling value for the play volume, and
determining the play sampling growth rate as the popularity
prediction indicator

FIG. 2

obtaining a sampling start time and a sampling end time
on the basis of the popularity sampling time period

performing sampling at a starting point for the play volume
at the sampling start time to obtain the starting play volume

performing sampling at an ending point for the play volume
at the sampling start time to obtain the ending play volume

FIG. 3

obtaining a sampling duration on the basis of the
sampling start time and the sampling end time

obtaining the play sampling growth rate of the live
broadcast service according to the starting play volume,
the ending play volume and the sampling duration

FIG. 4

performing popularity prediction comparison between a
preset growth rate threshold and the play sampling
growth rate

converting the data transmission mode from the unicast
type to a multicast type, when the play sampling growth
rate is greater than or equal to the preset growth rate
threshold

FIG. 5

sending a bitstream information to the multicast server, the bitstream information is the corresponding bitstream information when the data transmission mode is the unicast type

forwarding the bitstream information to a multicast network via the multicast server

providing the live broadcast service to the target user via the multicast network, after forwarding the bitstream information to the multicast network

FIG. 6

determining that the play volume meets the preset standard-reaching condition, and the time point when the play volume meets the preset standard-reaching condition is the standard-reaching time point, when the play volume is greater than or equal to the preset play volume threshold

setting the popularity sampling time period, on the basis of the standard-reaching time point and a preset sampling duration

FIG. 7

800

801 live broadcast start module

802 popularity detection module

803 sampling configuration module

804 popularity prediction module

805 data transmission adjustment module

FIG. 8

900

electronic device

901 processor

902 memory

FIG. 9

<div align="center">

**INTERNATIONAL SEARCH REPORT**

</div>

| | International application No. |
|---|---|
| | **PCT/CN2023/100239** |

| | |
|---|---|
| **A.    CLASSIFICATION OF SUBJECT MATTER** | |
| H04N21/2187(2011.01)i | |
| According to International Patent Classification (IPC) or to both national classification and IPC | |

| **B.    FIELDS SEARCHED** |
|---|
| Minimum documentation searched (classification system followed by classification symbols) |
| IPC:H04N |
| Documentation searched other than minimum documentation to the extent that such documents are included in the fields searched |
| Electronic data base consulted during the international search (name of data base and, where practicable, search terms used) |
| CNABS; CNTXT; VEN; EPTXT; USTXT; WOTXT; JPTXT; CNKI; IEEE: 直播, 单播, 组播, 多播, 热度, 参与, 数量, 调整, 转换, 切换, 变换, 预测, 预估, 估计, live, unicast, multicast, broadcast, popularity, participation, amount, quantity, adjust, convert, switch, transform, forecast, estimate |

| **C.    DOCUMENTS CONSIDERED TO BE RELEVANT** | | |
|---|---|---|
| Category* | Citation of document, with indication, where appropriate, of the relevant passages | Relevant to claim No. |
| X | CN 105075218 A (BRITISH TELECOMM) 18 November 2015 (2015-11-18)<br>description, paragraphs [0043]-[0207], and figures 1-6 | 1-10 |
| X | CN 113115056 A (GUANGZHOU HUYA TECHNOLOGY CO., LTD.) 13 July 2021<br>(2021-07-13)<br>description, paragraphs [0039]-[0086], and figures 1-6 | 1-10 |
| X | CN 104283694 A (BEIJING UNIVERSITY OF POSTS AND TELECOMMUNICATIONS)<br>14 January 2015 (2015-01-14)<br>description, paragraphs [0030]-[0050], and figures 1-5B | 1-10 |
| A | CN 111246311 A (CLOUDMINDS (SHENZHEN) ROBOTICS SYSTEMS CO., LTD.) 05<br>June 2020 (2020-06-05)<br>entire document | 1-10 |
| A | JP 2010211519 A (SONY CORP.) 24 September 2010 (2010-09-24)<br>entire document | 1-10 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 September 2023** | **18 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/100239**

| Patent document cited in search report | | | Publication date (day/month/year) | Patent family member(s) | | | Publication date (day/month/year) |
|---|---|---|---|---|---|---|---|
| CN | 105075218 | A | 18 November 2015 | EP | 2785006 | A1 | 01 October 2014 |
| | | | | EP | 2979422 | A1 | 03 February 2016 |
| | | | | EP | 2979422 | B1 | 12 June 2019 |
| | | | | US | 2016080446 | A1 | 17 March 2016 |
| | | | | US | 10270821 | B2 | 23 April 2019 |
| | | | | WO | 2014155041 | A1 | 02 October 2014 |
| CN | 113115056 | A | 13 July 2021 | CN | 113115056 | B | 28 March 2023 |
| CN | 104283694 | A | 14 January 2015 | None | | | |
| CN | 111246311 | A | 05 June 2020 | None | | | |
| JP | 2010211519 | A | 24 September 2010 | None | | | |

Form PCT/ISA/210 (patent family annex) (July 2022)

REFERENCES CITED IN THE DESCRIPTION

**Patent documents cited in the description**

- CN 202210851451